# DEMANDE DE BREVET EUROPEEN

(11) **EP 0 924 637 A2**
(43) Date de publication de la demande: **23.06.1999**
(21) Numéro de dépôt: 98119736.1
(22) Date de dépôt: 20.10.1998
(51) Int. Cl.: G06K 9/00

(54) **Appareil codeur pour la transmission électronique de la signature personnelle moyennant l'empreinte digitale**

(30) Priorité: 28.10.1997 ES 9702232
(71) Demandeur: Soom Huggenberger, Verena, 29600 Marbella (Malaga) (ES)
(72) Inventeur: Soom Huggenberger, Verena, 29600 Marbella (Malaga) (ES)

(57) **Abrégé**

Appareil codeur pour la transmission électronique de la signature personnelle moyennant l'empreinte digitale, qui permet de signer au moyen de l'empreinte digitale et d'un code personnel, complété par un code-barres, qui rend la falsification impossible, garantissant un secret absolu étant donné que les empreintes digitales de l'utilisateur ne seront nullement visibles pour un tiers et seront effacées immédiatement après chaque transaction.

## Description

La présente invention a pour objet un appareil codeur pour la transmission électronique de la signature par empreinte digitale codée.

En effet, lénorme expansion de l'utilisation de l'Internet, Intranet et de l'E-mail pour les communications du commerce électronique et d'autres types d'affaires s'y référant entre les entreprises, banques, et clients (personnes morales et personnes physiques) et vu l'importance toujours croissante de ces nouveaux réseaux de communication "cyber", il est nécessaire de créer immédiatement des outils efficaces de protection contre le dénommé "Cyber Crime".

Comme il ressort d'une récente étude de l'Association of British Insurers, les compagnies d'assurances du Royaume Uni reçoivent chaque année des demandes de compensation pour pertes causées par "vol par computer" pour une somme d'argent très importante. Toutefois, selon un rapport publié pu le "Home Office" à Londres, ce chiffre serait beaucoup plus important vu que les petites et moyennes entreprises ne sont en principe pas assurées contre le crime par computer. Cet Office cite que l'économie du Royaume Uni perd énormément d'argent dû au crime de computer mentionné.

Alors qu'actuellement existent des installations de sécurité très coûteuses contre le crime "Cyber" que seulement d'importantes organisations peuvent se permettre, l'appareil de la présente demande de patente est dessiné pour protéger chaque utilisateur des moyens courants de communication électronique, tels que cartes de crédit, E-mail, télécopie, Internet etc. et son prix fera de lui un outil de protection très accessible.

En effet, cet appareil représente un "hardware" qui peut être connecté par fiche à tout ordinateur, télécopieur, bancomat, caisse d'un magasin, etc. afin de permettre une signature par empreinte digitale plus code personnel, complété par un CODE-BARRES impossible de falsifier, vu que selon le code convenu avec le correspondant, l'expéditeur du messsage peut utiliser en plus de la carte "client" ou d'identité, un de ses dix doigts de ses deux mains plus le code personnel et la "CODE-BARRES" convenu, (programme "font-code-barres", semblable au "font" normal de Microsoft qui propose actuellement soixante différentes possibilités d'écriture) pour transcrire l'empreinte du doigt utilisé en code-barres unique, garantissant un secret absolu en ce qui concerne le code et l'empreinte digitale de l'utilisateur, vu que ceux-ci ne seront nullement visibles pour un tiers et effacés immédiatement après chaque transaction.

L'appareil de cette demande de patente se présente sous forme de réceptacle ou boîte réunissant les caractéristiques suivantes et comprend en outre:

Une ouverture pour introduire la "smart card", qui est une carte d'identification munie d'un microchip (par exemple une carte de crédit, d'identité etc.).

Un écran qui est programmé pour donner les instructions suivantes après l'introduction de la "smart-card":
- Veuillez introduire le code personnel correspondant à votre carte et presser le bouton [ok/continuer] ou [annuler].
- Veuillez poster votre doigt sur le tiroir et pousser le tiroir à l'intérieur de la caméra jusqu'à l'arrêt.
   (Lorsque le tiroir touche le bouton d'arrêt, le caméra fera la photographie de l'empreinte digitale et débloquera le tiroir).
- Votre empreinte digitale a été photographiée par la caméra , veuillez introduire votre code personnel et le "CODE-BARRES" désiré et presser soit le bouton [ok/continuer] afin de transcrire votre empreinte en code-barres, soit le bouton [annuler].
- Votre signature en code-barres est prête, vous pouvez compléter votre transaction / envoyer votre message/ ordre en pressant le bouton [ok/continuer].
- Votre signature a été imprimée à la fin de votre transaction/ message, veuillez retirer votre carte et votre reçu.
- En retirant votre carte vous avez effacé la photographie de vos empreintes digitales et le code-barres qui figuraient provisoirement sur le disque dur.

Un clavier à numéros pour introduire le code personnel, ainsi que les deux boutons de commande suivants:
- [ok/ continuer]
- [annuler]

Un orifice avec ou sans tiroir permettant l'introduction de la première phalange du doigt à photographier.

Une ouverture de sortie pour le rapport de transmission sur papier du message avec la signature transcrite en code-barres, (option).

Une fiche pour connecter l'appareil avec l'ordinateur, le télécopieur etc.

Une fiche pour connecter au courant électrique

Une caméra photographique digitale avec un objectif équivalent à 38/459 mm, permettant un agrandissement de 12 x et une mémoire sur disquette de 88,9 mm (équivalente aux caméras digitales DSC-F1 ou DKC-ID1 de SONY).

Mécanisme de tiroir avec bouton d'arrêt qui va déclencher la caméra photographique:

Disque dur contenant tout le programme y compris le "font - CODE BARRES" (le font normal de Microsoft propose un total de 60 différentes écritures)

Dispositif de transport de papier et d'impression pour le rapport de transmission (option).
Comme mentionné au début, le but de l'invention est un appareil d'identification des transactions faites par des communications électroniques par un moyen unique et personnel, les empreintes digitales, d'est-à-dire les sillons de la peau des bouts des doigts introduits dans l'orifice ou posés sur la plate-forme de l'appareil, photographiés par la caméra digitale après un agrandissement en format "A4" (environ 10 fois la grandeur naturelle)

En résumé, un client d'une banque, lors de l'ouverture d'un compte courant ne présentera pas seulement ses papiers d'identité, mais conviendra également avec la banque que ses transactions et ordres ne devraient être exécutés que si ceux-ci sont identifiables avec son code personnel correspondant aux "CODES-BARRES" de ses empreintes digitales convenus.

### Exemple:

Le client convient qu'il utilisera pour ses empreintes digitales l'annulaire de la main gauche ou l'index de la main droite et le "code personnel - CODE-BARRES" que la banque lui remet lors de l'ouverture du compte. A l'aide de ce "Code Personnel-CODE BARRES" le client, *tout en décidant les Fonts-Code-barres qu'il utilisera pour toutes ses transactions, par exemple:*
*"Font-Code-barres-....." pour l'annulaire et le*
*"Font-Code-barres-....." pour l'index*
*sans toutefois les indiquer à la banque*, produit en présence du représentant de la banque les "CODES-BARRES" des deux doigts convenus, qui seront déposés dans son dossier et qui seront également applicables pour les transactions avec les cartes de crédit de ladite banque.

Ainsi, le client évite qu'en cas de vol sa carte de crédit puisse être utilisée. En outre, il se protège contre toute imitation de sa signature écrite à la main.

Avec la rationalisation du travail bancaire et son automatisation, ainsi qu'en vue du développement du commerce électronique, il est primordial qu'un système d'identification et d'authentification rapide et fiable soit à la disposition de chaque citoyen, le protégeant contre le crime "Cyber".

Afin de comprendre plus facilement non seulement la constitution mais également l'usage propre de l'appareil de l'invention, le texte suivant se réfère à un exemple pratique de réalisation, étant entendu que la dite explication est un simple énoncé et ne saura en aucun cas être limitative aussi bien en ce qui concerne l'appareil que les dessins annexés qui le démontrent comme suit:

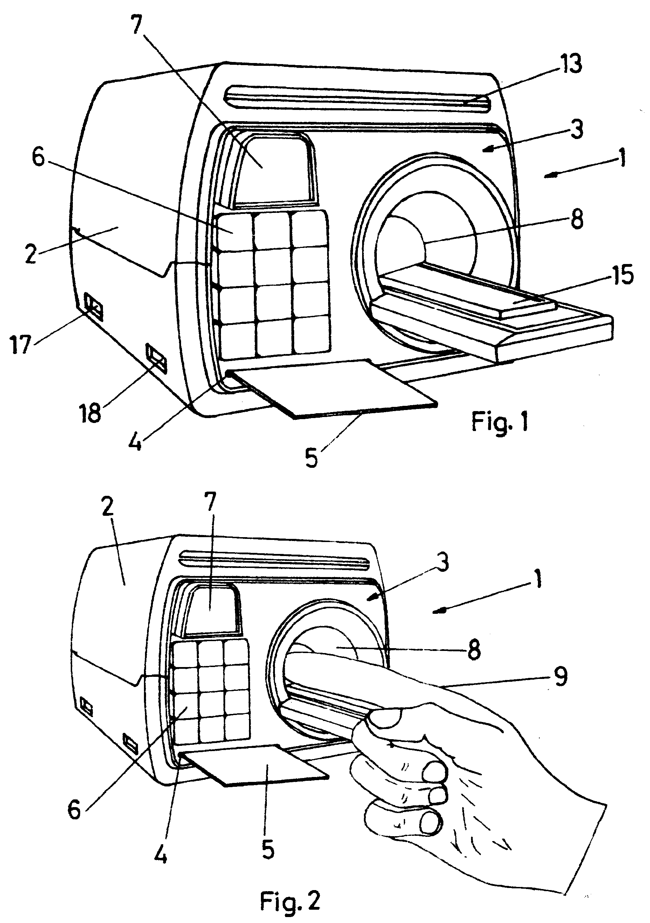

La figure 1 montre une vue en perspective de l'appareil de l'invention.
La figure 2 montre une vue en perspective de l'appareil de l'invention avec un doigt positionné pour photographier l'empreinte digitale.

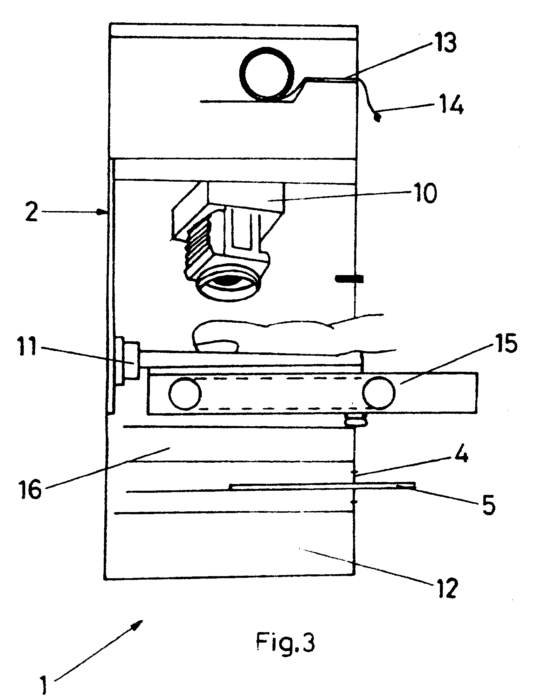

La figure 3 montre une vue sectionnée de l'appareil.

L'appareil 1 est composé d'un corps prismatique général constitué par la carcasse 2, qui présente sur sa face frontale 3 une ouverture 4 pour introduire une carte 5 d'identification munie d'un microchip.

En dessus de cette ouverture 4 se trouve un clavier à numéros 6 et en dessus un écran 7 sur lequel apparaissent les instructions pour l'utilisation de l'appareil.

En outre, sur la face frontale de la carcasse se trouve un orifice 8 par lequel la première phalange du doigt 9 est introduite et photographiée par une caméra digitale 10, actionée par un bouton d'arrêt 11.

L'appareil contient également un disque dur 12 contenant le programme et le font "code-barres".

Dans la partie supérieure de la face frontale de la carcasse apparaît une ouverture 13 à travers laquelle sort le papier 14 après l'émission du rapport de transmission.

Le doigt 9 va être posé sur un support 15 déplaçable vers l'intérieur.

L'appareil dispose également d'un lecteur de chips 16 qui se trouve en dessus de l'ouverture 4 pour l'introduction de la cette 5 d'identification.

Finalement, sur un côte latéral de la carcasse apparaît une prise 17 pour connecter l'appareil avec l'ordinateur et une prise 18 pour connecter l'appareil avec une prise d'électricité.

## Revendications

1. Appareil codeur pour la transmission électronique de la signature personnelle moyennant l'empreinte digitale; caractérisé parce qu'il comprend une carcasse, de préférence prismatique, dont la face frontale présente: une ouverture pour introduire une carte d'identification munie d'un microchip de la personne; un écran où apparaissent les instructions de l'usage de l'appareil; un clavier à numéros pu lequel le code personnel et l'autre code-barres sont introduits et deux touches de commande; un orifice permettant d'introduire la première phalange du doigt de la main, qui, en touchant un bouton d'arrêt, fait fonctionner une caméra que l'appareil contient et qui photographie l'empreinte digitale qui est transcrite immédiatement en code-barres cité en même temps que le reçu de cette transmission est obtenu au moyen d'un papier qui sort par l'ouverture placée sur la face frontale de la carcasse; tandis que le retrait de la carte d'identification de l'appareil provoque l'effacement de l'empreinte digitale et du code-barres.
